(19)

Europäisches
Patentamt
European
Patent Office
Office européen
des brevets

(11)  **EP 4 513 386 A1**

(12)  **EUROPEAN PATENT APPLICATION**

(43) Date of publication:
**26.02.2025   Bulletin 2025/09**

(51) International Patent Classification (IPC):
**G06N 3/0895** (2023.01)

(21) Application number: **23275127.1**

(22) Date of filing: **24.08.2023**

(52) Cooperative Patent Classification (CPC):
**G06N 3/0895**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **BAE SYSTEMS plc
London SW1Y 5AD (GB)**

(72) Inventor: **The designation of the inventor has not
yet been filed**

(74) Representative: **BAE SYSTEMS plc
Group IP Department
Warwick House
P.O. Box 87
Farnborough Aerospace Centre
Farnborough Hampshire GU14 6YU (GB)**

(54)  **DATA CLASSIFICATION OR REGRESSION**

(57)    A computer-implemented method of classifying
or regressing data comprises obtaining (202) a labelled
source dataset comprising inputs $X_S$ and labels $Y_S$, and
obtaining (204) an unlabelled target dataset comprising
inputs $X_T$. The method further obtains (206) a feature
mapping for the labelled source dataset and the unla-
belled target dataset, and creates (208), based on the
inputs $X_T$ of the unlabelled target dataset, a new dataset
$\tilde{X}_T$, wherein latent features of the new dataset $\tilde{X}_T$ are
diverse in a feature space induced by the feature map-
ping. A machine learning model is trained (210) based on
the labelled source dataset $X_S$ and $Y_S$, and the new
dataset $\tilde{X}_T$, and used (212) to predict responses of an
unlabelled dataset, e.g. to classify the unlabelled dataset
in order to detect an event or object such as an image or
sound.

Obtain labelled source dataset comprising inputs $X_S$ and labels $Y_S$
202

Obtain unlabelled target dataset comprising inputs $X_T$
204

Obtain a feature mapping for the obtained data
206

Create new dataset $\tilde{X}_T$, wherein latent features of $\tilde{X}_T$ are diverse
208

Train a machine learning model based on the labelled source data $X_S$, $Y_S$, and the new data $\tilde{X}_T$
210

Use the trained model to predict the responses of an unlabelled dataset
212

Fig. 2

**Description**

FIELD OF THE INVENTION

The present invention relates to processing data and in particular to classification or regression of data comprising digital images or audio.

BACKGROUND

Semi-supervised learning (SSL) is a machine learning paradigm which leverages both labelled and unlabelled training data for classification and/or regression tasks. In a case where labelled source data $X_S$, $Y_S$, and unlabelled target data $X_T$ have been obtained, a problem may arise if the responses of the unlabelled data $Y_T$ are not uniformly distributed, that is, $X_T$ is "imbalanced". This may especially be true in a special case of SSL known as unsupervised domain adaptation (UDA), where the goal is explicitly to predict $Y_T$. Imbalances in $X_T$ have been found to harm the performance of popular SSL and UDA algorithms in many realistic scenarios, including tasks such as classification or regression of data that comprises digital images or audio.

SUMMARY

Embodiments of the present invention can address one or more of the above technical problems.

Embodiments may provide methods for balancing unlabelled data $X_T$ and may involve diversity-based sampling for imbalanced semi-supervised learning of data. Embodiments may do this by creating a new set $\tilde{X}_T$, for which the responses $\tilde{Y}_T$ would approximately follow a uniform distribution, without knowing or even having to predict what the responses are. Embodiments can do this by forming $\tilde{X}_T$ of datapoints which are, on average, far away from each other ("diverse") in a latent feature (aka, embedding) space, i.e., diversity-based sampling. The datapoints in $\tilde{X}_T$ need not necessarily be elements of $X_T$. For instance, the datapoints may comprise averages of groups of elements of the unlabelled data $X_T$, or an augmentation technique may be applied to the unlabelled data $X_T$ to generate the datapoints of the new dataset $\tilde{X}_T$.

Embodiments can provide effective adaptation that can correct for changes in target label marginal distribution using diversity-based sampling. Embodiments may be based on a realisation that sampling the target data in a way which is diverse with respect to that data's features can naturally balance the labels. This may avoid having to estimate the target label distribution, which can be inaccurate for small samples, or if the pseudo labels are erroneous. Embodiments may use a diversity sampling algorithm which can be used in conjunction with any existing UDA algorithm. Some embodiments can use algorithms based on k-means clustering or determinantal point processes (DPPs). The algorithms are computationally efficient and readily scale to large samples and high-dimensional data.

Embodiments can resample data such that the source and target datasets have the same, or similar, label proportions. Embodiments can be applicable to both shallow (balance the entire set in one go) and deep (sample one balanced minibatch at a time) UDA algorithms. Embodiments can resample the unlabelled data directly, thereby forgoing the need to estimate $P_{Y_T}$ or $\hat{Y}_T$, and can be more effective in a low-data regime. Embodiments can correct for label shift under concurrent shifts in class-conditional input distributions. Relaxed label shifts can be large and commonplace in certain scenarios, such as acoustic ecology and audio classification more broadly.

According to an aspect of the present invention there is provided a computer-implemented method of classifying or regressing data (e.g. to detect an event or object in an unlabelled dataset, or to predict some desired properties of that dataset), the method comprising:

obtaining a labelled source dataset comprising inputs $X_S$ and labels $Y_S$;

obtaining an unlabelled target dataset comprising inputs $X_T$ ;

obtaining a feature mapping (aka, featurizer, feature extractor, feature projection, embedding map) for the labelled source dataset and the unlabelled target dataset;

creating, based on the inputs $X_T$ of the unlabelled target dataset, a new dataset $\tilde{X}_T$, wherein latent features (aka, embeddings, activations, representations) of the new dataset $\tilde{X}_T$ are diverse (pairwise dissimilar; that is, on average, far away from each other) in a feature space induced by the feature mapping;

training a machine learning model based on the labelled source dataset $X_S$ and $Y_S$, and the new dataset $\tilde{X}_T$, and

using the machine learning model to predict responses of an unlabelled dataset.

The unlabelled dataset may comprise the unlabelled target dataset $X_T$, the new dataset $\tilde{X}_T$, or a new/another unlabelled dataset.

The step of creating the new dataset may comprise selecting some of the inputs of the unlabelled target dataset $X_T$ as datapoints of the new dataset $\tilde{X}_T$ using diversity-based sampling. On average, the latent features (which may also be called activations, embeddings or representations) of the new dataset $\tilde{X}_T$ can be far away from each other (pairwise dissimilar) compared to the inputs of the unlabelled target dataset $X_T$. The responses, or predicted responses, of $\tilde{X}_T$ may typically follow a uniform distribution. For a classification task, this can correspond to $\tilde{X}_T$ containing an approximately equal number of instances of each class, or predicted class. For example, this may be between 45% and 55% for a two-class problem.

The step of training the machine learning model may be performed using an unsupervised domain adaptation (UDA) or semi-supervised learning (SSL) technique.

The step of obtaining the feature mapping may comprise obtaining a feature mapping trained using the obtained labelled source dataset and the unlabelled target dataset, or obtaining a feature mapping based on an existing model. The step of obtaining the feature mapping may comprise using an algorithm that can generate features (aka embeddings, activations, representations) of the obtained labelled source dataset and the unlabelled target dataset. The step may comprise training a first model on the labelled source dataset. The step may comprise training a self-supervised representation using any combination of the labelled source dataset, the unlabelled target dataset, or a new dataset. The step may comprise obtaining an existing mapping from another source, for example, a pre-trained model. Alternative methods of obtaining a suitable feature mapping may also be used.

The step of creating the new dataset $\tilde{X}_T$ may comprise selecting instances of the unlabelled target dataset by performing a plurality of Determinantal Point Process (DPP) draws on the unlabelled target dataset $X_T$. A number of the plurality of DPP draws may correspond to a size of the unlabelled target dataset. The method may comprise uniformly sampling a subset of the unlabelled target dataset to produce a uniformly sampled subset and performing the plurality of DDP draws on the uniformly sampled subset.

Alternatively, the step of creating the new dataset $\tilde{X}_T$ may use a k-means clustering algorithm on the unlabelled target dataset.

In some embodiments involving a classification task, parameter k of the k-means clustering algorithm may be (initially) set as a size of a least frequent class of the labelled source dataset ($Y_S$) multiplied by a number of classes in the labelled source dataset. The method may comprise iteratively refining the parameter k by predicting label distribution of the unlabelled target dataset, e.g. by means of pseudo labels, kernel mean matching, expectation minimisation, or black box predictors.

In some embodiments involving a classification task, the step of creating the new dataset $\tilde{X}_T$ may comprise using the k-means clustering algorithm to perform a stratified sampling of each cluster of the unlabelled target dataset. The parameter k may be set to a number of classes in the labelled source dataset, or some other value.

The step of using the machine learning model to predict the responses of the unlabelled dataset may comprise classifying inputs of the unlabelled dataset. The classifying may comprise detecting presence or non-presence of an object/event in the unlabelled dataset.

The source dataset and the unlabelled dataset may comprise digital images. The classifying the inputs of the unlabelled dataset may be used to detect or recognise an object in the unlabelled dataset (that comprises an image/video).

The source dataset and the unlabelled dataset may comprise digitised sounds, e.g. based on an audio recording. The classifying the inputs of the unlabelled dataset may be used to detect or recognise a specific (or type of) sound in the unlabelled dataset (that comprises the digitised sounds).

The step of using the machine learning model to predict responses of an unlabelled dataset may comprise regressing inputs of the unlabelled dataset to predict properties of the unlabelled dataset. For example, the step may predict a size, speed, bearing, direction, distance, and/or orientation of an object in the unlabelled dataset.

According to an aspect of the present invention there is provided a computer-implemented method of training a machine learning model (e.g. a classifier for image or sound detection/recognition, or a regression model for predicting properties of data, such as images or sounds), such as an artificial neural network classifier, the method comprising:

obtaining a labelled source dataset comprising inputs $X_S$ and labels $Y_S$;

obtaining an unlabelled target dataset comprising inputs $X_T$,

obtaining a feature mapping for the labelled source dataset and the unlabelled target dataset;

creating, based on the inputs $X_T$ of the unlabelled target dataset, a new dataset $\tilde{X}_T$, wherein latent features of the new

dataset $\bar{X}_T$ are diverse in a feature space induced by the feature mapping, and

training a machine learning model based on the labelled source dataset $X_S$ and $Y_S$, and the new dataset $\bar{X}_T$.

According to a further aspect of the present invention there is provided a computer-implemented method of using a trained machine learning model, (e.g. for image or sound detection/recognition, or to predict some desired properties of given images or sounds), the method comprising:

obtaining the trained machine learning model (produced according to a method substantially as described herein), and

using the machine learning model to predict responses of an unlabelled dataset.

According to another aspect of the present invention there is provided a device comprising a processor configured to perform any method substantially as described herein.

According to yet another aspect of the present invention, there is provided a computer-readable storage medium comprising instructions which, when executed by a processor, causes the processor to carry out any of the methods described herein.

The features described herein in relation to any aspect may apply equally to another aspect and therefore, for the sake of conciseness, are not repeated.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise sub-components which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The methods described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/or may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

BRIEF DESCRIPTION OF THE DRAWINGS

Embodiments of the invention will now be described by way of example only and with reference to the accompanying drawings:

Figure 1 is a block diagram of a computing device configurable to perform embodiments;

Figure 2 is a flowchart illustrating example steps of an embodiment, and

Figure 3 shows some exemplar spectrograms of sound events in datasets used for an experiment.

DETAILED DESCRIPTION

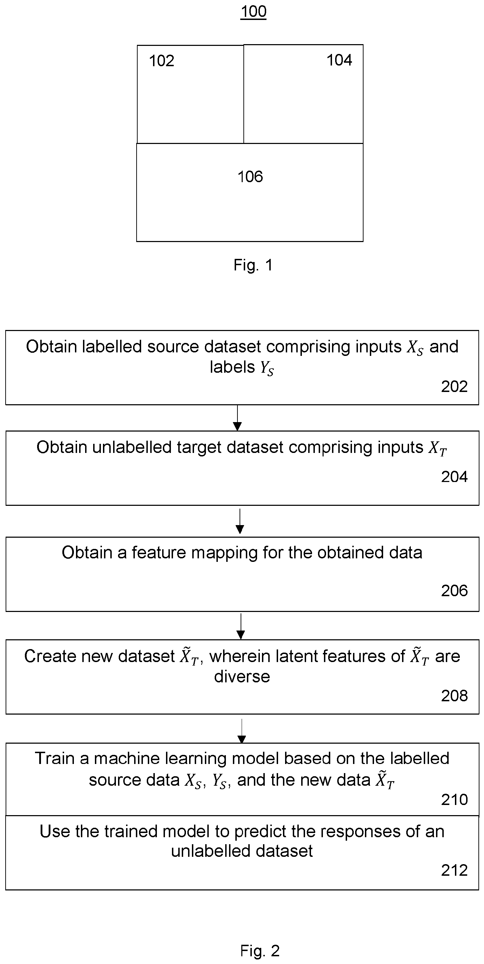

Figure 1 is a block diagram of a computing device 100 configurable to execute embodiments of the invention. The device will normally comprise, or be associated with, at least one processor 102, memory 104 and a communications interface 106.

The at least one processor 102 may comprise one or more of: a microprocessor, a microcontroller and an integrated circuit. The memory 104 may comprise volatile memory, such as random access memory (RAM), for use as temporary memory, and/or non-volatile memory such as Flash, read only memory (ROM), or electrically erasable programmable ROM (EEPROM), for storing data, programs, or instructions, for example. The communications interface 106 can provide data communication between the device and other devices/components, e.g. via a wireless or wired internet connection, a cellular network connection, or the like. Other components and features of the device, such as a housing, power source/supply, display, audio output, user interface, etc, will be well-known to the skilled person and need not be described herein in detail.

In some embodiments the computing device 100 may comprise a constrained-resource device, but which has at least the minimum hardware capabilities required to use a trained neural network/ML model. The device may be: a smartphone, tablet, laptop, computer or computing device, virtual assistant device, a connected camera, etc. It will be understood that this is a non-exhaustive and non-limiting list of example devices.

Figure 2 is a schematic illustration of an example method according to an embodiment and shows steps that can be performed by means of software instructions being executed by the computing device 100. However, in some embodiments one or more of the steps may be performed by a remote computing device, such as a server or a cloud service, that is in communication with the device 100. It will also be appreciated that at least one of the steps described herein may be re-ordered or omitted. One or more additional steps may be performed in some cases. Although the steps are shown as being performed in sequence in the Figures, in alternative embodiments some of them may be performed concurrently, possibly on different processors or cores.

It will also be understood that embodiments can be implemented using any suitable software, programming language, data editors, etc, and may be represented/stored/processed using any suitable data structures and formats. The method can be initiated in any suitable manner, such as an application being opened by a user or called by another process. The steps may be executed by a stand-alone application or may be provided as part of a multi-function application.

At step 202 the method may obtain a labelled source dataset $X_S$ and $Y_S$. Any of the data obtained by embodiments can be obtained from any local or remote storage that is available to the computing device 100 executing the method. The data will have typically been created and stored in advance, e.g. by capturing digital images or sounds using suitable equipment. A labelled dataset comprises a dataset where each instance (e.g. image or spectrogram) has a label that identifies the desired response of a model to that instance. The datasets used by embodiments may be obtained from any local or remote data source that is in communication with the processor 102 of the computing device 100. The labelled source dataset may be created in any suitable manner, e.g. a human expert reviewing the instances/inputs in the source dataset $X_S$ and assigning them labels $Y_S$.

At step 204 the method may obtain an unlabelled target dataset $X_T$. This dataset is intended to be used for the same classification or regression task as the labelled source dataset obtained at step 202. For example, if the dataset obtained at step 202 was intended to train a model to detect a specific type of sound (i.e. classify data as containing or not containing that type of sound) then task to be performed on the unlabelled target dataset is also to detect/classify based on the presence or absence of that type of sound.

A problem may arise if the responses $Y_T$ of the unlabelled dataset $X_T$ are not uniformly distributed, that is, $X_T$ is "imbalanced". Embodiments can aim to balance $X_T$, which involves creating a new dataset $\tilde{X}_T$, for which the responses $\tilde{Y}_T$ would approximately follow a uniform distribution, without knowing or even having to predict what the responses are. For instance, in the case of a binary classification task where there are two possible responses (classes) (e.g., indicating presence or absence of an object/event) then around 50% of the instances in $\tilde{Y}_T$ would indicate the presence of the object and the remaining 50% the absence of the object. As another example, if there are 10 classes then each class will contain around 10% of the total number of datapoints. For a regression task, $\tilde{Y}_T$ would approximately follow a uniform distribution over the support of $Y_T$.

At step 206 the method may obtain a feature mapping (aka, featurizer, feature extractor, feature projection, embedding map) for the data obtained at step 202 and step 204. The feature mapping used by embodiments can comprise any algorithm that can generate features (aka embeddings, activations, representations) of the obtained data. Embodiments may obtain a feature mapping by training a model, such as an artificial neural network (NN), on the labelled source data. The training can be done using any conventional NN training method. In this case, the features may be numeric representations of $\tilde{X}_T$ extracted at an intermediate point in the neural network, and may comprise vectors representing points in a high-dimensional space. Alternatively, embodiments may train a self-supervised representation using any combination of the labelled source data, the unlabelled target data, or entirely new data. Alternatively, embodiments may obtain an existing mapping from another source, for example, a pre-trained model. Alternative embodiments for obtaining a suitable feature mapping may also be used.

The obtained feature mapping can be used to generate latent features (aka embeddings) of the unlabelled target dataset $X_T$. The feature mapping transforms the raw data $X_T$ into a numerical representation (features) which preserves and condenses the useful information in $X_T$. These features are expected to be more similar (given some similarity measure such as cosine distance, Euclidian distance, dot product similarity, etc) if they belong to instances having the same or similar labels. These features are then used (at step 208) to inform the creation of the new dataset $\tilde{X}_T$, by forming $\tilde{X}_T$ of instances whose features are pairwise dissimilar, or diverse.

At step 208 the method can create the new (unlabelled) dataset $\tilde{X}_T$ based on the obtained unlabelled target dataset $X_T$ and the obtained feature mapping. This new dataset is intended to be used in conjunction with the labelled dataset $X_S$ and $Y_S$, either together or in separate steps, to train a machine learning model to complete a desired task. In general terms, the new dataset can be created such that its datapoints are diverse (pairwise dissimilar) in the feature space induced by the feature mapping obtained in step 206. The datapoints in the new dataset $\tilde{X}_T$ may comprise selected elements of $X_T$ or they may be generated based on the data of $X_T$. For instance, the new datapoints may be generated by averaging of groups of elements of the unlabelled data of $X_T$, or by applying one or more augmentation technique to the unlabelled data $X_T$, e.g. increasing the amount of data by adding slightly modified copies of the existing data, or creating new synthetic data from the existing data. Embodiments may assume that features of a certain class are, on average, closer to other features of the same class than those of a different class. Embodiments may assume that similar features imply similar labels. This is known as the continuity assumption.

At step 210 the method may train a model using the labelled source dataset $X_S$ and $Y_S$, and the new dataset $\tilde{X}_T$, either together or in separate steps, to complete a desired task. The training may be performed using any suitable UDA and/or SSL technique, or some combination of multiple techniques. In the case of UDA, a first model trained on $X_S$ and $Y_S$ may be adapted to produce a second/adapted model that it is more suitable for predicting responses of the unlabelled target dataset. The adaptation may be performed using any suitable technique, in particular unsupervised domain adaptation (UDA).

At step 212 the method may use the trained model to predict the responses of the unlabelled target dataset $X_T$, $\tilde{X}_T$, or of entirely new data. Embodiments may use the responses in any suitable manner, e.g. provide a visual or auditory notification/warning to a user or perform any other type of action, either internal to the computing device 100 or providing a control signal to an external device that is in communication with it. For instance, the detection of an object in the environment may be used as an input to an algorithm, such as an autonomous vehicle control system in order to track or take action to avoid the object.

As another example, predicting the responses of the unlabelled dataset can comprise regressing inputs of the unlabelled dataset to predict desired properties of the unlabelled dataset. For example, it may be used to predict properties such as the size, speed, bearing, direction, distance and/or orientation of an object in the unlabelled dataset. Such properties can be used as an input to an algorithm, such as an autonomous vehicle control system, in order to track or take action to avoid the object. For example, in a case where it is desired to train a regression model which can predict the speed of a ship given audio recordings of that ship obtained from a nearby hydrophone or other recording equipment, then the training data $X_S$ and $X_T$ would comprise short (e.g. 1 to 5 seconds) audio recordings of ships passing the hydrophone, and the source labels $Y_S$ would be continuous scalar variables giving the speed of the passing ship at the instant corresponding to that audio. The labels $Y_S$ may be obtained by analysing GPS tracking data for the corresponding ships. The labels $Y_S$ may need to cover a wide range of speeds, i.e., over the range of possible speeds that ships in the area may be expected to travel at (e.g. 5 to 30 mph), but the labels $Y_S$ may not be uniformly distributed over this range. The diversity-based sampling algorithms may select some instances from $X_T$ as described herein to create a new dataset $\tilde{X}_T$, resulting that the (unknown) corresponding labels $\tilde{Y}_T$ may be approximately uniformly distributed over the range of values of $Y_S$. In a use case, the regression model would receive as input short audio recordings of passing ships and output the predicted speed of that ship.

As mentioned above, embodiments may adapt the first model using UDA. In UDA, a model is first trained on labelled source domain instances $(X_S, Y_S)$. It is then deployed, where it is exposed to unlabelled target domain instances $X_T$, and is tasked with generating predictions $\hat{Y}_T$. If the distribution $P_{X_S} \neq P_{X_T}$, rather than predicting responses straight away, better performance can often be achieved by first adapting to $X_T$ in some way.

The distributions must usually be related in some way: specifically, this implies the change in the data distribution is a result of natural changes in data collection conditions. The following are examples of factors which could potentially cause natural changes between the source and target data distributions in underwater acoustic data:

- Differences in background noise or signal-to-noise ratio (SNR) characteristics, determined by:

  ◦ Recording equipment and methods, including any electrical interference or noises generated by the recording platform
  ◦ Time of day and year
  ◦ Weather conditions
  ◦ Site exposure
  ◦ Flow characteristics, including flow rate and degree of turbulence

- Differences in acoustic propagation characteristics, determined by:

  ◦ Water depth
  ◦ Seabed topography and composition
  ◦ Temperature and salinity profile
  ◦ Distance to the sound source - this determines the signal intensity, which components of the signal can be picked up, as well as the presence of any echoes or multipaths

- Variations in the dialects of the vocalising marine mammals
- New unseen sound events, an example of *negative set bias,* also related to the problem of *open set learning.*
- Concept shift: most commonly introduced by annotator or label bias, which includes ambiguities in class definitions, or variations in the labelling error rate between different annotators. As a specific example, annotators may have different ways of defining the cut-off point at which the sound of a passing vessel merges with the ambient noise.

Known UDA methods are dominated by the distribution alignment approach, which attempts find a mapping $\phi$ such that the statistical distance between $P_{\phi(X_S)}$ and $P_{\phi(X_T T)}$ is minimised. A new model, possibly simply a linear layer, is then trained on $(\phi(X_S), Y_S)$, and used to predict $\hat{Y}_T$ from $\phi(X_T)$. Two main classes of methods exist: kernel methods, which embed the distributions in a reproducing kernel Hilbert space (RKHS) and adversarial training. Methods based on the latter constitute the state-of-the-art on many benchmark UDA datasets; however, in practice, adversarial training is unreliable (cf. mode collapse) and computationally expensive. In contrast, kernel methods can usually be solved simply and dependably as generalised eigenvalue problems and so are a better option for small datasets and deployment to low-power devices.

The present inventors have appreciated that the dependence on pseudo labels can be eliminated outright if $X_T$ can be sampled in a way which is diverse with respect to that data's features. As the data distribution has changed, the original model's decision boundary may no longer apply to the new data, resulting in erroneous pseudo labels. However, as the feature extractor was trained on related data, the features of $X_T$ may still cluster according to the class to which they belong (the cluster assumption). Importantly, this is a weaker condition than requiring the predictions to be correct. Diversity-based sampling has the added advantage of acting as a regulariser for kernel UDA, as it can improve the conditioning of the generalised eigenvalue problem. Embodiments are believed to represent the first application of resampling to unsupervised balancing of $X_T$. Three example algorithms for drawing diverse samples of $X_T$ based on its features that can be used by embodiments will be disclosed below.

The first example algorithm is based on the known determinantal point process (DPP) technique (see, for example, A. Kulesza and B. Taskar, "Determinantal point processes for machine learning," Foundations and Trends in Machine Learning, 2012). A point process on a set $X$ is a probability measure over "point configurations" of $X$. Sampling a point process can be interpreted as randomly drawing a subset of $X$. For a DPP the probability of drawing subset $A$ is proportional to the determinant of a likelihood kernel $L_A$ defining the pairwise similarities between its elements. Specifically:

$$\mathbb{P}[A] = \frac{\det L_A}{\det [I + L_{\mathcal{X}}]}, \qquad \forall A \subseteq \mathcal{X}.$$

This has a "diversifying" effect among the elements of $A$, with more similar elements less likely to co-occur. Thus, if the cluster assumption holds, the class distribution of $A$ is more likely to be uniformly distributed, without ever needing to predict those classes. One property of DPPs is that the size of $A$ is bounded by the rank of $L_X$. However, since DPP sampling is a stochastic process, it is possible to form larger samples, which will still be diverse, by simply drawing from the DPP as many times as necessary. Additionally, as sampling can become expensive for $X$ larger than a few thousand, embodiments can perform each DPP draw on a uniform subset of $X$ rather than the entire corpus.

Algorithm 1 below illustrates combining this sampling approach with shallow UDA. It is assumed that it is desirable to generate a balanced sample $\tilde{X}_T$ of the same size as $X_T$. An adapted model can then be fitted using $X_S$, $Y_S$, $\tilde{X}_T$ and class weights w, which are computed based on $P_{Y_S}$. The class weights may be inversely proportional to the prevalence of each class in $Y_S$. The adapted model may comprise any known AI model, such as an artificial neural network, trained in a standard way using known training algorithms and known UDA algorithms. Inference of the target labels may comprise use of the model in the wild.

**Algorithm 1: UDA with label shift correction using DPP**

```
input: labelled source data X_S, Y_S, unlabelled target data
X_T
hyperparameters: uniform sample size J

    X̃_T = []
    k   = length (X_T)
    while length (X̃_T) < k
            X̃_T,U = uniformSample (X_T, J)
            L = computeSimilarityKernel (X̃_T,U)
            X̃_T,DPP = dppSample (X̃_T,U, L)
            X̃_T.append (X̃_T,DPP)
    end while

    #fit adapted model and predict labels
    w = computeClassWeights (Y_S)
    f  = fitAdaptedModel (X_S, Y_S, X̃_T, w)
    Ŷ_T = f(X_T)

output: predicted target labels Ŷ_T
```

This method can draw from the DPP multiple times in order to form larger samples than are otherwise possible. Each DPP draw may be performed on a uniform subset of $X_T$ (a subset of $J$ instances chosen uniformly at random from $X_T$) rather than the entire set to reduce computation time. The skilled person will be able to determine the hyperparameter $J$ by trial and error. This can involve trying different values of $J$ on a test set of data and selecting a value that provides the desired trade-off between computation time and the accuracy of the algorithm.

The second example algorithm is based on the known k-means clustering technique. This is another way to induce dissimilarity or "repulsiveness" between the elements of A. $X̃_T$ is defined as the centroids of $k$ clusters of $X_T$, even though these centroids are not (necessarily) elements of $X_T$. In this method, similar samples are subsumed into a single datapoint.

As k-means clustering is not a stochastic process, and $X_T$ is effectively being undersampled without replacement, the choice of $k$ is important. With a hypothetical algorithm that could achieve perfect balancing, this could set k to the number of classes times the number of samples in the smallest class. This has the advantage that, if $X_T$ were already balanced, the centroids would be exactly the datapoints in $X_T$. Thus, choosing $k$ reduces to estimating $P_{Y_T}$. This can be done by iterative pseudo labelling (noting that the pseudo labels are used only to estimate $P_{Y_T}$, not to balance the data directly, thus resulting in a better-conditioned problem; and that alternative known methods, listed next, do not use pseudo labels at all), expectation maximisation (EM), kernel mean matching (KMM), black box predictors, or some other known technique. This way, it is also possible to refine w based on $Ŷ_T$. Example pseudo code for this method is shown in below as Algorithm 2.

**Algorithm 2: UDA with label shift correction using kmeans1**

```
input: labelled source data $X_S$, $Y_S$, unlabelled target data
$X_T$

        $k$ = minClassSize($Y_S$)*numClasses($Y_S$)
        $w$ = computeClassWeights ($Y_S$)
        repeat until convergence of $k$ or max iterations
        reached
                $\tilde{X}_T$ = $k$meansCentroids ($X_T$, $k$)
                $f$ = fitAdaptedModel ($X_S$, $Y_S$, $\tilde{X}_T$, $w$)
                $\hat{Y}_T$ = $f(X_T)$ #predict pseudolabels
                $k$ = minClassSize($\hat{Y}_T$)*numClasses($\hat{Y}_T$)
                $w$ = computeClassWeights ($\hat{Y}_T$) #update weights
        based on pseudolabels
        end repeat until

    output: predicted target labels $\hat{Y}_T$
```

The parameter $k$ may be set to the size of the least frequent class times the number of classes. Equivalently, $k$ may be set to the proportion of $X_T$ belonging to the least frequent class times the number of datapoints in $X_T$. The example method uses a meta-algorithm to iteratively refine $k$. Specifically, iteration improves the estimate of the size of the least frequent class, respectively, the estimate of the proportion of $X_T$ belonging to the least frequent class.

The third example algorithm is also based on k-means clustering technique. This variant uses k-means to perform a stratified sampling of each cluster, that is, selecting an equal number of samples, at random, from each cluster (or stratum). In this example, $k$ is set to the number of classes, however, $k$ could also be set to some other integer, and an arbitrary sample size can be drawn from each cluster, with or without replacement.

This method requires slightly stronger assumptions on the features of $X_T$ than the previous two above, as the clusters must correspond more closely to the class groupings. Thus, a large number of classes, or some pathological data structures unsuited to k-means, may cause performance to deteriorate. This may be improved by encouraging intra-class tightening and inter-class separation in the feature space with a dedicated loss function when training the base model. This method is shown in Algorithm 3.

**Algorithm 3: UDA with label shift correction using kmeans2**

```
input: labelled source data X_S, Y_S, unlabelled target data
X_T

        k = numClasses(Y_S)
        C = kmeansClusters (X_T, k)

        J = length (X_T)/k
        X̃_T = []
        for each C_{i=1,...,k} ∈ C
                X̃_{T,i}  = uniformSample (C_i, J)
                X̃_T.append (X̃_{T,i})
        end for

        w = computeClassWeights (Y_S)
        f  = fitAdaptedModel (X_S, Y_S, X̃_T, w)
        Ŷ_T = f(X_T)

output: predicted target labels Ŷ_T
```

An experiment performed to evaluate the effectiveness of the 3 above algorithms on a real-world domain shift problem will now be described. The chosen task was the binary detection of humpback whale calls across data from different acoustic monitoring programs. Differences in recording equipment and environmental conditions, the population-level variability of the song, biases in the nontarget set, along with large potential changes in label distribution, make this a challenging problem of relaxed label shift.

5 datasets containing humpback whale calls and a representative selection of nontarget underwater acoustic events, drawn from distinct monitoring programs in the seas off Hawaii, Massachusetts, Bermuda, Madagascar and Antarctica were used in the experiment (see: L. Sayigh et al., "The Watkins Marine Mammal Sound Database: An online, freely accessible resource," in Proceedings of Meetings on Acoustics, 2016; NOAA Pacific Islands Fisheries Science Center, "Hawaiian Islands Cetacean and Ecosystem Assessment Survey (HICEAS) towed array data. Edited and annotated for DCLDE 2022," NOAA National Centers for Environmental Information. 2022; NOAA Pacific Islands Fisheries Science Center, "Pacific Islands Passive Acoustic Network (PIPAN) 10kHz Data." NOAA National Centers for Environmental Information, 2021; S. Heimlich, D. Mellinger, and H. Klinck, "MobySound," 2012. https://mobysound.org (accessed Feb. 14, 2023) and F. Pace, P. White, and O. Adam, "Hidden Markov modeling for humpback whale (Megaptera Novaeanglie) call classification," Proceedings of Meetings on Acoustics, 2012). This yielded a total of 20 adaptation tasks. A 6th source of data, collected from various locations around Australia (Integrated Marine Observing System, "Australian National Mooring Network," 2017. https://imos.org.au/facilities/nationalmooringnetwork (accessed Apr. 09, 2023) was used to inform model selection and hyperparameter choices, but not for the final results.

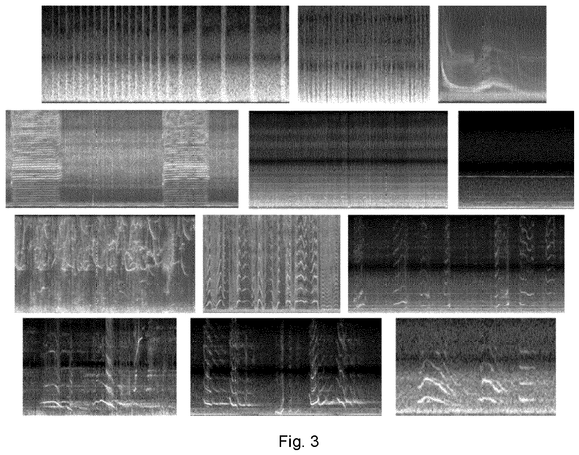

Some exemplar spectrograms of sound events in the datasets (4 kHz bandwidth, time axis scales variable) are shown in Figure 3. The top row shows sperm whale clicks, pilot whale clicks, seal vocalisations. The second row shows minke whale boings, right whale calls in strong vessel noise, electrical interference. The third row shows dolphin whistles, dolphin creaks, right whale calls, and the bottom row shows three humpback whale calls.

So that the effect of the label shift was properly analysed, the class prevalence was varied artificially. Specifically, the proportion of instances in $X_T$ labelled "humpback whale" was varied from 5% to 95%, while keeping the total sample size constant (for each dataset). The datasets themselves varied in size from 200 to over 1000 samples. When used as the source training set, the classes were balanced exactly using the labels. The audio was resampled to 10 kHz, converted to mel spectrograms using 100 ms FFT windows with 50% overlap, normalised with per-channel energy normalisation and then split into 3.92 s analysis frames with 50% overlap. A simple 4-layer CNN was used as the core model, with 16 filters per layer and RELU activations. This was first trained normally on the source domain data, using the Adam optimiser, an initial learning rate of 0.001 and a batch size of 32, for 500 iterations.

At this point, the balancing algorithms were applied, if applicable. Dot-product similarity was used to compute the DPP kernel (which is then simply the Gram matrix of $X_T$), and cosine similarity for k-means. DPP sampling was implemented using the DPPy Python package (G. Gautier, G. Polito, R. Bardenet, and M. Valko, "DPPy: DPP Sampling with Python," JMLR - Machine Learning Open Source Software, 2019). In the experiments, the DPP hyperparameter $J$ was unused, i.e., the DPP is sampling over the entire corpus. Transfer component analysis (TCA), a popular shallow UDA algorithm based on a linear dimensionality-reducing transformation, was then applied to the final-layer activations of $X_S$ and $X_T$ to correct for the covariate shift, with the output dimension set to 8. Finally, a new linear classifier was trained on the transformed source features, and used to predict $\hat{Y}_T$.

In addition to the 3 algorithms disclosed above, 3 existing algorithms for label shift (namely, EM (Y. S. Chan and H. T. Ng, "Word Sense Disambiguation with Distribution Estimation," IJCAI, 2005), KMM (K. Zhang, B. Schölkopf, and Z. Wang, "Domain Adaptation under Target and Conditional Shift," ICML, 2013), and IPL (S. Garg, N. Erickson, J. Sharpnack, A. J. Smola, S. Balakrishnan, and Z. C. Lipton, "RLSbench: Domain Adaptation Under Relaxed Label Shift," ICML, 2023), and 2 baselines consisting of no adaptation (ERM) and TCA-only were compared. Finally, a hypothetical oracle balancer, which has access to the target labels, was tested to provide an upper bound for performance.

The entire experiment was repeated 10 times to reduce the influence of parameter initialisation and provide a measure of the uncertainty for the results. Performance was rated using the balanced accuracy (the mean of the true positive and true negative rate) of $\hat{Y}_T$, a measure unaffected by differing label proportions in the test set, and using the mean squared error of the proportion of humpback whale samples in the balanced set (BHP-MSE).

Table 1 below shows the balanced accuracy for each algorithm and label shift severity, averaged across all 20 adaptation tasks and 10 repeats per task, along with their standard error. Uncertainty is standard error and the best performing algorithm for each label shift highlighted in bold, second best underlined:

Table 1

| | Proportion of humpback whale instances in the target set (%) | | | | | |
|---|---|---|---|---|---|---|
| Algorithm | 95 | 90 | 80 | 75 | 67 | 60 |
| | Balanced accuracy (%) | | | | | |
| ERM | 84.2 ± 0.9 | 84.6 ± 0.9 | 84.3 ± 0.9 | 84.5 ± 0.9 | 84.5 ± 0.8 | 84.5 ± 0.9 |
| TCA | 75.6 ± 1.0 | 77.9 ± 0.9 | 81.2 ± 0.9 | 83.0 ± 0.9 | 85.9 ± 0.8 | 88.3 ± 0.9 |
| EM | <u>84.7 ± 1.2</u> | 86.7 ± 1.1 | 86.9 ± 1.0 | 87.0 ± 1.0 | 87.0 ± 1.0 | 87.0 ± 1.0 |
| KMM | **88.1 ± 1.0** | **88.5 ± 0.9** | **88.5 ± 0.9** | **88.6 ± 0.9** | <u>88.4 ± 0.8</u> | <u>88.6 ± 0.8</u> |
| IPL | 79.8 ± 1.2 | 81.4 ± 1.2 | 82.9 ± 1.2 | 83.4 ± 1.2 | 84.2 ± 1.2 | 84.9 ± 1.1 |
| DPP | 76.4 ± 0.9 | 77.8 ± 0.9 | 78.6 ± 0.9 | 79.5 ± 0.9 | 80.9 ± 0.9 | 81.9 ± 0.8 |
| kmeans1 | 76.7 ± 0.9 | 78.4 ± 0.9 | 80.0 ± 0.9 | 81.1 ± 0.9 | 82.9 ± 0.9 | 85.3 ± 0.9 |
| kmeans2 | 82.6 ± 1.0 | <u>86.9 ± 0.9</u> | <u>87.8 ± 0.9</u> | <u>88.2 ± 0.9</u> | **88.6 ± 0.9** | **88.7 ± 0.8** |
| Oracle | 89.2 ± 0.9 | 88.8 ± 0.9 | 88.9 ± 0.9 | 89.1 ± 0.9 | 88.8 ± 0.9 | 89.2 ± 0.9 |

Table 1 (continued)

| 50 | 40 | | 33 | 25 | 20 | 10 | 5 | Average |
|---|---|---|---|---|---|---|---|---|
| | | | | | | | | |
| 84.5 ± 0.9 | 84.7 ± 0.9 | | 84.7 ± 0.9 | 84.5 ± 0.9 | 84.6 ± 0.9 | 84.7 ± 0.9 | <u>84.6 ± 1.0</u> | 84.5 |
| **88.9 ± 0.9** | <u>88.2 ± 0.8</u> | | 86.3 ± 0.8 | 81.2 ± 1.0 | 78.9 ± 1.1 | 77.9 ± 1.0 | 78.4 ± 1.0 | 82.4 |
| 86.2 ± 1.0 | 84.8 ± 1.0 | | 83.9 ± 1.0 | 81.7 ± 1.1 | 81.9 ± 1.1 | 79.2 ± 1.1 | 77.5 ± 1.2 | 84.2 |
| 87.9 ± 0.8 | 86.8 ± 0.8 | | 85.7 ± 0.8 | 83.4 ± 1.0 | 81.8 ± 1.0 | 80.6 ± 1.1 | 79.9 ± 1.2 | <u>85.9</u> |
| 84.8 ± 1.2 | 84.8 ± 1.2 | | 84.3 ± 1.2 | 84.5 ± 1.2 | 83.8 ± 1.3 | 84.1 ± 1.2 | 83.0 ± 1.4 | 83.5 |
| 83.0 ± 0.9 | 84.5 ± 0.9 | | 85.6 ± 0.9 | 86.7 ± 0.9 | <u>87.1 ± 0.9</u> | <u>86.0 ± 1.0</u> | 83.0 ± 1.1 | 82.4 |
| 87.2 ± 0.9 | 87.8 ± 0.8 | | <u>88.0 ± 0.9</u> | <u>87.6 ± 0.9</u> | <u>87.1 ± 0.9</u> | 83.6 ± 1.1 | 82.3 ± 1.1 | 83.7 |
| <u>88.8 ± 0.9</u> | **88.9 ± 0.9** | | **88.8 ± 0.9** | **89.1 ± 0.8** | **88.9 ± 0.9** | **89.0 ± 0.9** | **88.9 ± 0.9** | **88.1** |
| 89.1 ± 0.8 | 88.8 ± 0.8 | 88.7 ± 0.9 | 88.4 ± 0.9 | 88.7 ± 0.9 | 88.5 ± 0.9 | 89.5 ± 0.9 | | 88.9 |

The BHP-MSE, and standard error, is shown in Table 2 below:

Table 2

| Algorithm | 5 | 10 | 20 | 25 | 33 | 40 |
|---|---|---|---|---|---|---|
| | | | | | | |
| TCA | 20.3 | 16.0 | 9.0 | 6.3 | 2.8 | 1.0 |
| EM | **6.4 ± 0.5** | 4.7 ± 0.4 | 4.0 ± 0.4 | 3.8 ± 0.4 | 3.8 ± 0.4 | 3.9 ± 0.4 |
| KMM | 8.4 ± 0.4 | 4.8 ± 0.3 | 2.6 ± 0.2 | 2.3 ± 0.2 | 2.0 ± 0.2 | 2.1 ± 0.2 |
| IPL | 11.3 ± 0.6 | 7.3 ± 0.5 | 3.4 ± 0.3 | 2.5 ± 0.2 | 1.5 ± 0.1 | 1.1 ± 0.1 |
| DPP | 19.3 ± 0.2 | 16.5 ± 0.2 | 12.7 ± 0.3 | 11.4± 0.3 | 9.5 ± 0.3 | 7.9 ± 0.3 |
| kmeans1 | 18.8 ± 0.3 | 16.7 ± 0.4 | 12.6 ± 0.4 | 10.3 ± 0.4 | 6.6 ± 0.3 | 3.8 ± 0.3 |
| kmeans2 | 10.7 ± 0.6 | **4.3 ± 0.4** | **1.0 ± 0.1** | **0.6 ± 0.1** | **0.3 ± 0.0** | **0.2 ± 0.0** |

Table 2 (continued)

| | Proportion of humpback whale instances in the target set (%) | | | | | | | |
|---|---|---|---|---|---|---|---|---|
| 50 | 60 | 67 | 75 | 80 | 90 | 95 | Average | |
| | BHP-MSE ×100 | | | | | | | |
| **0.0** | 1.0 | 2.8 | 6.3 | 9.0 | 16.0 | 20.3 | 8.5 | |
| 4.2 ± 0.4 | 4.6 ± 0.5 | 5.0 ± 0.5 | 5.7 ± 0.5 | 6.2 ± 0.6 | 8.1 ± 0.6 | 9.9 ± 0.7 | 5.4 | |
| 2.4 ± 0.2 | 3.2 ± 0.2 | 4.0 ± 0.3 | 5.6 ± 0.4 | 6.7 ± 0.4 | 10.1 ± 0.5 | 13.0 ± 0.6 | 5.2 | |
| 1.1 ± 0.1 | 1.6 ± 0.2 | 2.2 ± 0.2 | 3.4 ± 0.3 | 4.3 ± 0.4 | 7.1 ± 0.5 | 10.1 ± 0.7 | 4.4 | |
| 5.7 ± 0.3 | 3.9 ± 0.2 | 2.6 ± 0.2 | 1.6 ± 0.1 | 1.4 ± 0.1 | 4.2 ± 0.2 | 9.5 ± 0.3 | 8.2 | |
| 1.6 ± 0.2 | 1.1 ± 0.2 | 1.0 ± 0.1 | 1.9 ± 0.2 | 3.1 ± 0.2 | 8.6 ± 0.4 | 12.7 ± 0.5 | 7.6 | |
| 0.2 ± 0.0 | **0.3 ± 0.0** | **0.4 ± 0.1** | **0.8 ± 0.1** | **1.1 ± 0.1** | **3.1 ± 0.3** | **6.6 ± 0.5** | **2.3** | |

The results show that TCA is indeed affected by label shift, and its performance drops below that of no adaptation when the class imbalance becomes greater than 2-to-1. However, resampling can be used to successfully correct for this and recover most, if not all, of the performance drop. The resampling algorithms are at their best in different regimes of label shift, although the kmeans2 algorithm sustained high performance across almost the entire range of shifts, including reaching oracle-level performance for many shifts, had the highest performance on average, and also incurred no drop when the data was already balanced. The algorithm, kmeans2, significantly outperformed prior work across a wide range of shifts, and is computationally simple to run and implement. In the label shift regime most likely in the bioacoustic event detection scenario, namely the nontarget events outnumbering the humpback calls, all 3 novel diversity-based algorithms performed competitively.

It will be appreciated that the above experiment represents merely one example embodiment and many variations are possible. Embodiments can use diversity-based sampling to balance any unlabelled data without requiring pseudo labels. Embodiments can improve performance in applications such as a bioacoustic event detection task under relaxed label shift, where the typical application of a popular UDA algorithm (TCA) faltered.

Furthermore, diversity-based sampling has the flexibility that it can be coupled with practically any existing UDA algorithm, and can also be applied to the broader class of semi-supervised learning problems as well. Embodiments may be applied to a broad variety of UDA and semi-supervised learning algorithms, as well as a range of data types and modalities including performing classification or regression for applications such as image classification and natural language processing. Embodiments may be applied to any task for which labelled data $X_S$, $Y_S$, and unlabelled data $X_T$ can be obtained.

Alternative existing UDA and SSL algorithms with which diversity-based sampling can be coupled (other than TCA, used in the above experiments) include:

- Correlation alignment (CORAL) (see B. Sun, J. Feng, and K. Saenko, "Return of frustratingly easy domain adaptation," 30th AAAI Conference on Artificial Intelligence, AAAI 2016, pp. 2058-2065, 2016, doi: 10.1609/aaai.v30i1.10306)
- Geodesic flow kernel (GFK) (see B. Gong, Y. Shi, F. Sha, and K. Grauman, "Geodesic flow kernel for unsupervised domain adaptation," Proceedings of the IEEE Computer Society Conference on Computer Vision and Pattern Recognition, pp. 2066-2073, 2012, doi: 10.1109/CVPR.2012.6247911)

- Joint distribution alignment (JDA) (see M. Long, J. Wang, G. Ding, J. Sun, and P. S. Yu, "Transfer feature learning with joint distribution adaptation," Proceedings of the IEEE International Conference on Computer Vision, pp. 2200-2207, 2013, doi: 10.1 109/ICCV.2013.274)
- Transfer joint matching (TJM) (see M. Long, J. Wang, G. Ding, J. Sun, and P. S. Yu, "Transfer joint matching for unsupervised domain adaptation," Proceedings of the IEEE Computer Society Conference on Computer Vision and Pattern Recognition, pp. 1410-1417, Sep. 2014, doi: 10.1109/CVPR.2014.183)
- Manifold embedded distribution alignment (MEDA) (see J. Wang, W. Feng, Y. Chen, M. Huang, H. Yu, and P. S. Yu, "Visual Domain Adaptation with Manifold Embedded Distribution Alignment," MM 2018 - Proceedings of the 2018 ACM Multimedia Conference, pp. 402-410, Jul. 2018, doi: 10.1145/3240508.3240512)
- Domain adversarial neural networks (DANN, CDAN) (see, for example, Y. Ganin et al., "Domain-Adversarial Training of Neural Networks," JMLR, 2015)
- Fully Test-time Adaptation by Entropy Minimization (TENT)
- Noisy student
- FixMatch
- BN-adapt

Terms such as 'component', 'module', 'processor' or 'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

**Claims**

1. A computer-implemented method of classifying or regressing data comprising:

   obtaining (202) a labelled source dataset comprising inputs $X_S$ and labels $Y_S$;
   obtaining (204) an unlabelled target dataset comprising inputs $X_T$;
   obtaining (206) a feature mapping for the labelled source dataset and the unlabelled target dataset;
   creating (208), based on the inputs $X_T$ of the unlabelled target dataset, a new dataset $\tilde{X}_T$, wherein latent features of the new dataset $\tilde{X}_T$ are diverse in a feature space induced by the feature mapping;
   training (210) a machine learning model based on the labelled source dataset $X_S$, $Y_S$, and the new dataset $\tilde{X}_T$, and
   using (212) the machine learning model to predict responses of an unlabelled dataset.

2. A method according to claim 1, wherein the step of creating (208) the new dataset comprises selecting some of the inputs of the unlabelled target dataset $X_T$ as datapoints of the new dataset $\tilde{X}_T$ using diversity-based sampling.

3. A method according to claim 1 or 2, wherein the step (210) of training the machine learning model is performed using an unsupervised domain adaptation, UDA, or semi-supervised learning, SSL, technique.

4. A method according to claim 3, wherein the step of creating (208) the new dataset $\tilde{X}_T$ comprises selecting instances of the unlabelled target dataset by performing a plurality of Determinantal Point Process, DPP, draws on the unlabelled target dataset $X_T$, wherein a number of the plurality of DPP draws corresponds to a size of the unlabelled target dataset.

**5.** A method according claim 4, further comprising uniformly sampling a subset of the unlabelled target dataset to produce a uniformly sampled subset, and performing the plurality of DDP draws on the uniformly sampled subset.

**6.** A method according to claim 3, wherein the step of creating (208) the new dataset $\tilde{X}_T$ comprises using a k-means clustering algorithm on the unlabelled target dataset.

**7.** A method according to claim 6, wherein the step of using (212) the machine learning model to predict the responses of the unlabelled dataset comprises classifying inputs of the unlabelled dataset, and wherein parameter k of the k-means clustering algorithm is initially set as a size of a least frequent class of the labelled source dataset $Y_S$ multiplied by a number of classes in the labelled source dataset, and the method further comprises iteratively refining the parameter k by predicting label distribution of the unlabelled target dataset.

**8.** A method according to claim 6, wherein the step of using (212) the machine learning model to predict the responses of the unlabelled dataset comprises classifying inputs of the unlabelled dataset, and wherein the step of creating (208) the new dataset $\tilde{X}_T$ comprises using the k-means clustering algorithm to perform a stratified sampling of each cluster of the unlabelled target dataset, and wherein parameter k is set to a number of classes in the labelled source dataset.

**9.** A method according to any preceding claim, wherein the step of using (212) the machine learning model to predict the responses of the unlabelled dataset comprises classifying inputs of the unlabelled dataset, and wherein the source dataset and the unlabelled dataset comprise digital images or sounds, and the classifying the inputs of the unlabelled dataset is used to detect or recognise an image or a type of sound in the unlabelled dataset.

**10.** A method according to claim 1, wherein the step of using (212) the machine learning model to predict responses of an unlabelled dataset comprises regressing inputs of the unlabelled dataset to predict properties of the unlabelled dataset.

**11.** A method according to any preceding claim, wherein the unlabelled dataset comprises the unlabelled target dataset $X_T$, the new dataset $\tilde{X}_T$, or a new unlabelled dataset.

**12.** A computer-implemented method of training a machine learning model comprising:

obtaining (202) a labelled source dataset comprising inputs $X_S$ and labels $Y_S$;
obtaining (204) an unlabelled target dataset comprising inputs $X_T$;
obtaining (206) a feature mapping for the labelled source dataset and the unlabelled target dataset;
creating (208), based on the inputs $X_T$ of the unlabelled target dataset, a new dataset $\tilde{X}_T$, wherein latent features of the new dataset $\tilde{X}_T$ are diverse in a feature space induced by the feature mapping, and
training (210) a machine learning model based on the labelled source dataset $X_S$, $Y_S$, and the new dataset $\tilde{X}_T$.

**13.** A computer-implemented method of using a machine learning model comprising:

obtaining the machine learning model trained according to claim 12, and
using the machine learning model to predict responses of an unlabelled dataset.

**14.** A device (100) comprising a processor (102) configured to perform a method according to any preceding claim.

**15.** A computer-readable storage medium comprising instructions which, when executed by a processor, causes the processor to carry out a method according to any of claims 1 to 13.

<u>100</u>

| 102 | 104 |
| --- | --- |
| 106 | |

Fig. 1

Obtain labelled source dataset comprising inputs $X_S$ and labels $Y_S$

202

Obtain unlabelled target dataset comprising inputs $X_T$

204

Obtain a feature mapping for the obtained data

206

Create new dataset $\tilde{X}_T$, wherein latent features of $\tilde{X}_T$ are diverse

208

Train a machine learning model based on the labelled source data $X_S$, $Y_S$, and the new data $\tilde{X}_T$

210

Use the trained model to predict the responses of an unlabelled dataset

212

Fig. 2

Fig. 3

| Europäisches Patentamt European Patent Office Office européen des brevets | **EUROPEAN SEARCH REPORT** | Application Number EP 23 27 5127 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/281592 A1 (GIVENTAL GARY I [US] ET AL) 9 September 2021 (2021-09-09) * paragraphs [0020] - [0027], [0044] - [0047], [0056] - [0060], [0065], [0087] * | 1-15 | INV. G06N3/0895 |
| X | US 6 925 452 B1 (HELLERSTEIN JOSEPH L [US] ET AL) 2 August 2005 (2005-08-02) * column 2, line 60 - column 3, line 50 * * column 5, line 17 - column 8, line 31 * | 1,12-15 | |

| | | | TECHNICAL FIELDS SEARCHED (IPC) |
|---|---|---|---|
| | | | G06N |

The present search report has been drawn up for all claims

| Place of search | Date of completion of the search | Examiner |
|---|---|---|
| The Hague | 10 February 2024 | Bykowski, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 27 5127**

This annex lists the patent family members relating to the patent documents cited in the above-mentioned European search report.
The members are as contained in the European Patent Office EDP file on
The European Patent Office is in no way liable for these particulars which are merely given for the purpose of information.

**10-02-2024**

| Patent document cited in search report | | Publication date | Patent family member(s) | | Publication date |
|---|---|---|---|---|---|
| US 2021281592 | A1 | 09-09-2021 | NONE | | |
| US 6925452 | B1 | 02-08-2005 | GB | 2367402 A | 03-04-2002 |
| | | | JP | 3737714 B2 | 25-01-2006 |
| | | | JP | 2002041464 A | 08-02-2002 |
| | | | KR | 20010107554 A | 07-12-2001 |
| | | | US | 6925452 B1 | 02-08-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. KULESZA** ; **B. TASKAR**. Determinantal point processes for machine learning. *Foundations and Trends in Machine Learning*, 2012
- **L. SAYIGH et al.** The Watkins Marine Mammal Sound Database: An online, freely accessible resource. *Proceedings of Meetings on Acoustics*, 2016
- Hawaiian Islands Cetacean and Ecosystem Assessment Survey (HICEAS) towed array data. NOAA National Centers for Environmental Information., 2022
- Pacific Islands Passive Acoustic Network (PIPAN) 10kHz Data. NOAA National Centers for Environmental Information, 2021
- **S. HEIMLICH** ; **D. MELLINGER** ; **H. KLINCK**. *MobySound*, 2012, https://mobysound.org
- **F. PACE** ; **P. WHITE** ; **O. ADAM**. Hidden Markov modeling for humpback whale (Megaptera Novaeanglie) call classification. *Proceedings of Meetings on Acoustics*, 2012
- Australian National Mooring Network. *Integrated Marine Observing System*, 2017, https://imos.org.au/facilities/nationalmooringnetwork
- **G. GAUTIER** ; **G. POLITO** ; **R. BARDENET** ; **M. VALKO**. DPPy: DPP Sampling with Python. *JMLR - Machine Learning Open Source Software*, 2019
- **Y. S. CHAN** ; **H. T. NG**. Word Sense Disambiguation with Distribution Estimation. *IJCAI*, 2005
- **K. ZHANG** ; **B. SCHÖLKOPF** ; **Z. WANG**. Domain Adaptation under Target and Conditional Shift. *ICML*, 2013
- **S. GARG** ; **N. ERICKSON** ; **J. SHARPNACK** ; **A. J. SMOLA** ; **S. BALAKRISHNAN** ; **Z. C. LIPTON**. RLSbench: Domain Adaptation Under Relaxed Label Shift. *ICML*, 2023
- **B. SUN** ; **J. FENG** ; **K. SAENKO**. Return of frustratingly easy domain adaptation. *30th AAAI Conference on Artificial Intelligence, AAAI 2016*, 2016, 2058-2065
- **B. GONG** ; **Y. SHI** ; **F. SHA** ; **K. GRAUMAN**. Geodesic flow kernel for unsupervised domain adaptation. *Proceedings of the IEEE Computer Society Conference on Computer Vision and Pattern Recognition*, 2012, 2066-2073
- **M. LONG** ; **J. WANG** ; **G. DING** ; **J. SUN** ; **P. S. YU**. Transfer feature learning with joint distribution adaptation. *Proceedings of the IEEE International Conference on Computer Vision*, 2013, 2200-2207
- **M. LONG** ; **J. WANG** ; **G. DING** ; **J. SUN** ; **P. S. YU**. Transfer joint matching for unsupervised domain adaptation. *Proceedings of the IEEE Computer Society Conference on Computer Vision and Pattern Recognition*, September 2014, 1410-1417
- **J. WANG, W. FENG** ; **Y. CHEN** ; **M. HUANG** ; **H. YU** ; **P. S. YU**. Visual Domain Adaptation with Manifold Embedded Distribution Alignment. *MM 2018 - Proceedings of the 2018 ACM Multimedia Conference,*, July 2018, 402-410
- **Y. GANIN et al.** Domain-Adversarial Training of Neural Networks. *JMLR*, 2015